# EUROPEAN PATENT APPLICATION

(11) **EP 3 842 739 A1**
(43) Date of publication of application: **30.06.2021**
(21) Application number: 18930861.2
(22) Date of filing: 29.12.2018
(51) Int. Cl.: G01C 3/04, G21C 3/32

(54) **NUCLEAR REACTOR FUEL ASSEMBLY**

(30) Priority: 23.08.2018 RU 2018130533
(71) Applicant: Joint Stock Company "Experimental And Design Organisation "Gidropress" Awarded The Order of The Red Banner of Labour And Czsr Order of Labour, Podolsk, Moskovskaya obl. 142103 (RU)
(72) Inventor: V'YALITSIN, Viktor Vasil'evich, Podolsk, 142115 (RU); KUSHMANOV, Sergey Aleksandrovich, Podolsk, 142108 (RU); PUZANOV, Dmitriy Nikolaevich, Podolsk, 142100 (RU); V'YALITSIN, Dmitriy Viktorovich, Podolsk, 142115 (RU)
(74) Representative: Friese Goeden Patentanwälte PartGmbB
(86) International application number: PCT/RU2018/000912
(87) International publication number: WO 2020/040657

(57) **Abstract**

The nuclear reactor fuel assembly comprises a bundle of fuel elements installed in the frame formed by guide channels and retention grids, bottom nozzle, a removable head comprising collet tubes, upper mantle, a support element, and springs. Collet tubes are made of two coaxially arranged tubes, the lower and upper, with the provision of movement of one pipe relative to another. On the side surfaces of each pipe, stops are made that interact with each other and provide the selected length of the collet pipe, while the pipe passing through the hole in the plate of the operation mantle has a rigid fastening to the specified plate. The support element is a pipe with rigidly fixed plate interacting with the spring, and the upper mantle is made in the form of a pipe located coaxially to the pipe support element with necessary mounting and having a gap at the bottom of bosses, interacting with springs, and in the upper part of the support that interacts with the tube support element, with the plate supporting element opposite each of the bosses of the upper mantle is provided with holes, the shape of which conforms to the shape of the boss of the upper mantle, the margin between the hole in the plate supporting element and the boss is not less than the mounting gap between the upper tube mantle and tube support element.

For mounting and dismounting the removable head, a device can be used in accordance with RF patent No. 2075118.

The proposed improvement in the design of the removable head of the fuel Assembly makes it possible to reduce its dimensions while maintaining the fixation of the fuel Assembly in the reactor's internals at the time of damping the decreasing regulator.

## Description

The invention relates to nuclear energy, more particularly - to fuel assemblies of nuclear power reactors with pressurized water.

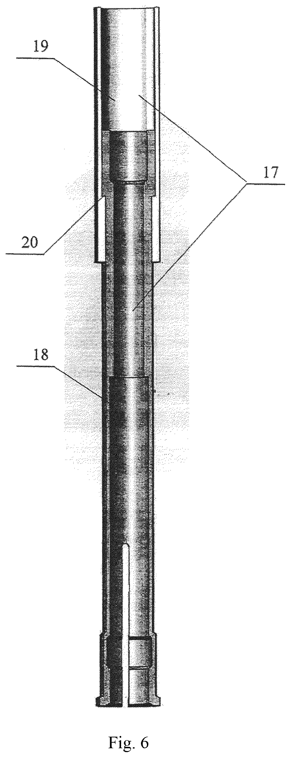

The nuclear reactor fuel assembly (prototype, Shmelev V.D., Dragunov Yu.G. et al. "WWER cores for nuclear power plants" - M .: ICC "Akademkniga", 2004, p. 13, Fig. 6.18), comprising a bundle of fuel elements installed in a frame formed by guide channels and retention grids, a bottom nozzle, and a removable head, is already known. The removable head comprises the upper and lower mantles, support hold-down plate, springs, collet tubes. The lower ends of the collet tubes are fixed to the guide channels, and the upper ones pass through holes in the hold-down plate and the upper mantle plate and have thrust bushings at the end. Thus, when the head is operating, there may be a regulator in its upper mantle.

The drawback of the known fuel assembly is that when the regulator decreases, the base plate moves along 17 collet tubes, which are fixed to the guide channels on one side and in the holes of the upper mantle plate on the other. To avoid jamming, it is necessary to perform a clear positioning of the holes for the passage of collet tubes in the base plate and the plate of the upper mantle. Also, this technical solution does not allow to reduce the height of the head in order to increase the fuel load without changing the dimensions of the fuel assembly. Another drawback of the known fuel assembly is that when the head is compressed, which is fixed by collets on the guide channels, the collet tubes go up relative to the upper mantle plate. This requires choosing the height of the upper shell so that the collet does not interact with the elements of the regulators, which is a drawback, since it increases the height of the head, which negatively affects the uranium capacity of the fuel assembly.

The objective of the invention is to develop a design of a fuel assembly with the increased uranium capacity while maintaining end-to-end dimensions dimensions.

The object of the invention is to reduce the axial dimensions of the head of the fuel assembly, which allows to increase the height of the fuel column.

The technical result of the invention is the design change of the removable head enabling pre-pressure the fuel assembly, the energy dissipation regulator decrease with reduced axial dimensions of the removable head.

Achieving the objective of the invention is provided by the nuclear reactor fuel assembly comprising the bundle of fuel elements (1) installed in the frame formed by guide channels (2) and retention grids (3), the mantle (4), the removable head (5) containing the upper mantle (6), the support element (7), springs (8). **The innovation lies in that** the upper mantle (6) removable head (5) is made in the form of a pipe (9) with fixed plate (10) interacting with the spring (8), support element (7) made in the form of a tube (11) located coaxially to the pipe (9) upper mantle (6) with a required installing gap (12) and having in the lower part of the boss (13) interacting with the spring (8), and at the upper part of a stop (14) interacting with the tube (9) of the upper mantle (6), the plate (10) of the upper mantle (6) opposite each of the bosses (13) of the support element (7) provided with holes (15), the shape of which conforms to the shape of the boss (13) of the support element (7), wherein the gap between the hole (15) in the plate (10) of the upper mantle (6) and the boss (13) is not less than the installing gap (12) between the pipe (11) of the support element (7) and tube (9) upper mantle (6).

According to the option, the nuclear reactor fuel assembly comprises a removable head with the upper mantle (6), a plate (16), and collet elements (17). **The innovation lies in that** the collet elements (17) are made of coaxially located lower tube (18) and the upper tube (19), rigidly fixed in the plate (16), the upper mantle (6), while on the inner surface of the upper tube (19) and on the outer surface of the lower tube (18) there are base platforms (20) that interact with each other.

The essence of the invention is explained by drawings, which are presented on:

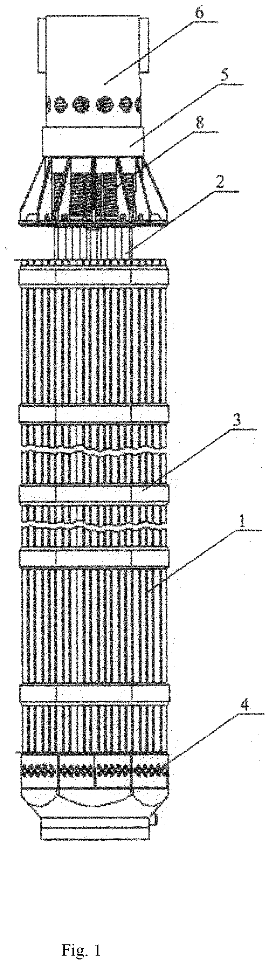

Fig. 1 - the nuclear reactor fuel assembly;

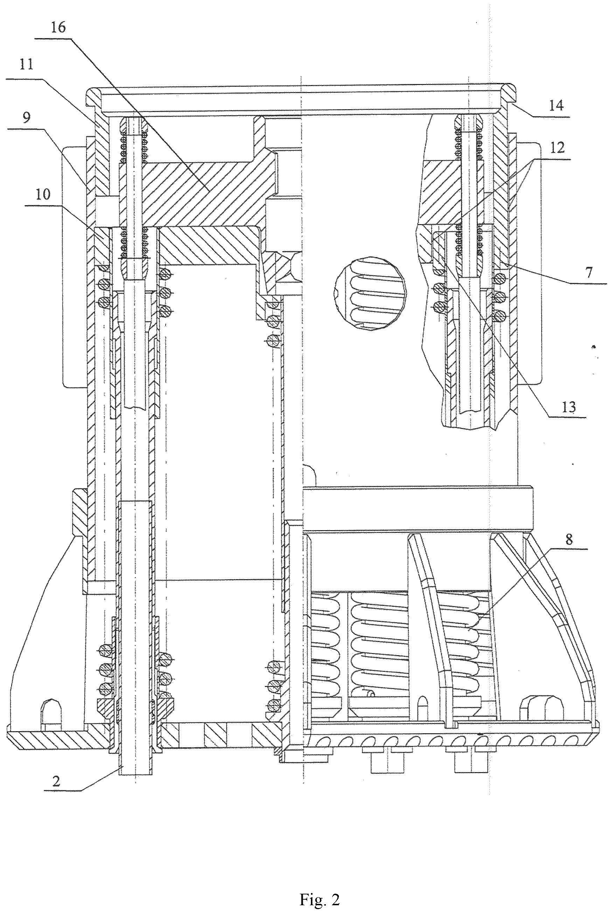

Fig. 2 - the vertical section of the removable head of the nuclear reactor fuel assembly, showing the position of the head elements when the regulator is deformed;

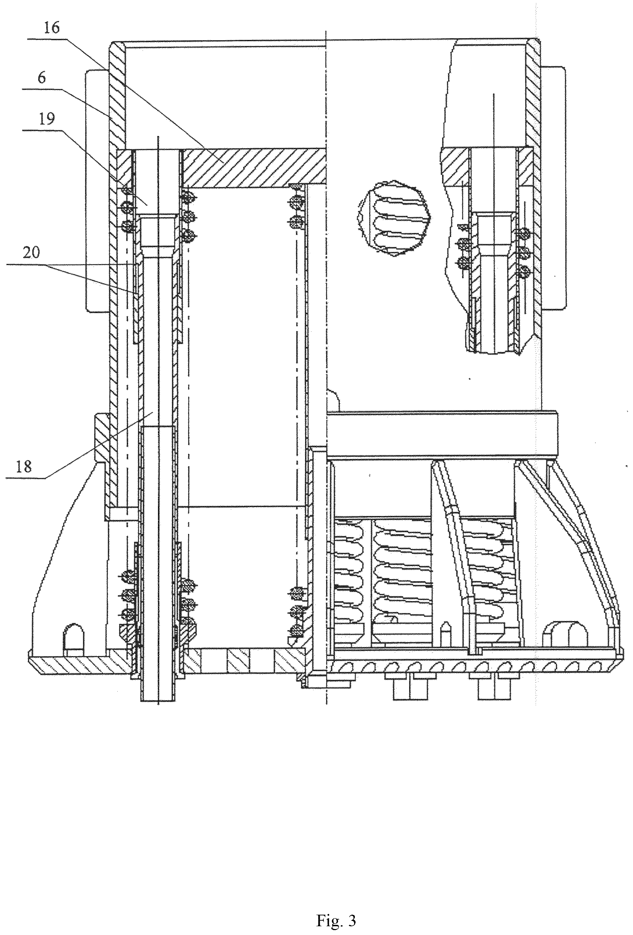

Fig. 3 - the vertical section of the pre-pressured removable head of the nuclear reactor fuel assembly;

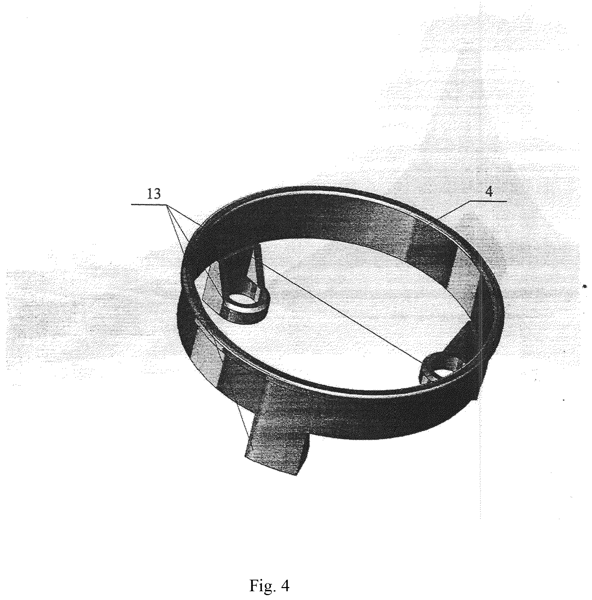

Fig. 4 - the support element with the bosses;

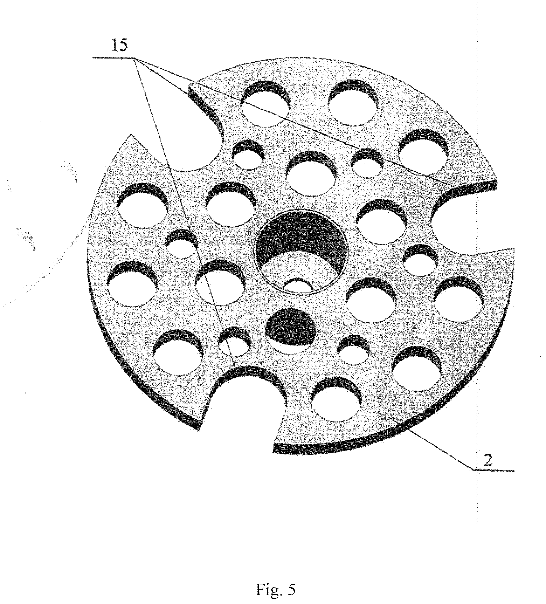

Fig. 5 - the upper mantle plate;
Fig. 6 - the section of a collet tube made of the upper tube and the lower tube.

The nuclear reactor fuel assembly comprising the bundle of fuel elements (1) installed in the frame formed by guide channels (2) and retention grids (3), the mantle (4), the removable head (5) containing the upper mantle (6), the support element (7), springs (8). The upper mantle (6) removable head (5) is made in the form of a pipe (9) with the rigidly fixed plate (10) interacting with the spring (8), support element (7) made in the form of a tube (11) located coaxially to the pipe (9) upper mantle (6) with a required installing gap (12) and having in the lower part of the boss (13) interacting with the spring (8), and at the upper part of a stop (14) interacting with the tube (9) of the upper mantle (6), the plate (10) of the upper mantle (6) opposite each of the bosses (13) of the support element (7) provided with holes (15), the shape of which conforms to the shape of the boss (13) of the support element (7), wherein the gap between the hole (15) in the plate (10) of the upper mantle (6) and the boss (13) is not less than the installing gap (12) between the pipe (11) of the support element (7) and tube (9) upper mantle (6).

According to the option, the nuclear reactor fuel assembly comprises a removable head with the upper mantle (6), a plate (16), and collet elements (17). The collet elements (17) are made of coaxially located lower tube (18) and the upper tube (19), rigidly fixed in the plate (16), the upper mantle (6), while on the inner surface of the tube (19) and on the outer surface of the lower tube (18) there are base platforms (20) that interact with each other.

The operation of the nuclear reactor fuel assembly is carried out as follows.

Portion of the springs (8) of the removable head (5) of the nuclear reactor fuel assembly thrusts their upper ends against the plate (10) of the upper mantle (6), rigidly connected to the upper mantle (6). The other portion of the springs (8) thrusts its upper ends against the bosses (13) of the support element (7).

The fuel assembly installed in the nuclear reactor with a removable head (5) is compressed by a block of protective tubes (not shown in the drawing). When pressuring the head (5) of the fuel assembly, the support element (7) together with the upper mantle (6) head (5) and plate (10) moves down, compressing all of the springs (8) of the fuel assembly spring module. The force generated by the springs (8) ensures that the fuel assembly does not float in all the operating modes.

When the emergency protection is triggered, the structural elements of the regulator (16) interact with the plate (10) of the upper mantle (6), pushing it down. The energy of the regulator decrease (21) is absorbed by the springs (8) interacting directly with the plate (10) of the upper mantle (6). The springs (8) that thrust against the bosses (13) of the support element (7) remain stationary due to the presence of cutouts in the plate (10) of the upper mantle (6), which include the bosses (13) of the support element (7). Thus, this ensures that the nuclear reactor fuel assembly is fixed in the plate of the reactor Protective Tube Unit when the emergency protection is triggered.

According to the option, collet elements (17) are slotted, consisting of upper (19) and lower (18) tubes with support platforms (20) on the inner surface of the tube (19) and the outer surface of the lower tube (18). Thus, the upper tube (19) of the collet element (17) is rigidly connected (for example, by welding) to the plate (16) of the upper mantle (6) of the head.

Springs with initial pre-pressure are installed coaxially to the collet elements (17) and create a force on the upper (19) and lower (18) tubes of the collet element (17). Due to this force, when the head is not compressed, the upper (19) and lower (18) tubes of the collet element (17) are pressed against each other by the base platforms (20) completed in them. The relative location of these base platforms (20) and upper (19) and bottom (18) of the tube taking into account a rigid connection of the upper tube (19) with the plate (16) and the upper mantle (6) of the head determines the maximum distance between the plates of the upper and lower mantles, therefore, the overall vertical dimension of the unloaded head of the fuel assembly (not shown in the drawing) and a preliminary pre-pressure of the head spring module.

The fuel assembly installed in the nuclear reactor with a removable head is pre-pressured by the internals of the nuclear reactor. When tightening the head of the fuel assembly upper mantle (6) head moves down together with the plate (16) and connected with it the upper tube (19) of the collet elements, which move along the bottom of collet tubes (18), wherein between the stop (20) upper tube (19) and the stop (20) of the lower collet tube (18) the gap is formed. The springs thrust their upper end against the plate (16), and the lower end through a special bushing into the lower protrusions of the lower tube (18) of the collet element (17). Each of the guide channels (not shown in the drawing) goes inside the corresponding lower tube (18) of the collet element (17) and thrusts against the stop (20), through which the pre-pressured force of the fuel assembly is transmitted to the guide channels. When tightening the head of the fuel assembly decreases the distance between the plate (16) and the upper ends of the guide channels, which are based on the lower collet tube (18) and, consequently, there is additional (above pre -) compression springs of the spring unit and increase efforts pre-pressure of the separate guide channels.

When the emergency protection is triggered, the structural elements of the regulator (21) interact with the plate (16) of the upper mantle (6). The energy of the regulator decrease (21) is absorbed by the springs interacting directly with the plate (16) of the upper mantle (6). The upper mantle (6) and the upper tube (19) of the collet element (17) are moved, the springs are compressed, adding to the load through the lower collet pipe (18) and the guide channels in the same way as when the fuel assembly is pre-pressured.

The proposed solution is most appropriate to use for operation on water-cooled nuclear power reactors.

## Claims

1. The nuclear reactor fuel assembly comprising the bundle of fuel elements (1) installed in the frame formed by the guide channels (2) and retenrion grids (3), bottom nozzle(4), removable head (5) comprising the upper mantle (6), supporting element (7), springs (8), **is characterized in that** the upper mantle (6) removable head (5) is made in the form of a pipe (9) with fixed plate (10) interacting with the spring (8), support element (7) made in the form of a tube (11) located coaxially to the pipe (9) upper mantle (6) with a required installing gap (12) and having in the lower part of the boss (13) interacting with the spring (8), and at the upper part of a stop (14) interacting with the tube (9) of the upper mantle (6), the plate (10) of the upper mantle (6) opposite each of the bosses (13) of the support element (7) provided with holes (15), the shape of which conforms to the shape of the boss (13) of the support element (7), wherein the gap between the hole (15) in the plate (10) of the upper mantle (6) and the boss (13) is not less than the installing gap (12) between the pipe (11) of the support element (7) and tube (9) upper mantle (6).

2. ΠThe nuclear reactor fuel assembly comprising a removable head (5) with an upper mantle (6), a plate (16), collet elements (17), **is characterized in that** the collet elements (17) are made of coaxially located lower tube (18) and upper tube(19) rigidly fixed in the plate (16), the upper mantle (16), while on the inner surface of the upper tube (19) and on the outer surface of the lower tube (18) there are base platforms (20) interacting with each other.
